**Europäisches Patentamt**

**European Patent Office**

**Office européen des brevets**

(19)

(11) **EP 1 150 496 A2**

(12) **EUROPEAN PATENT APPLICATION**

(43) Date of publication:
**31.10.2001 Bulletin 2001/44**

(51) Int Cl.⁷: **H04N 5/00**

(21) Application number: **01109920.7**

(22) Date of filing: **24.04.2001**

(84) Designated Contracting States:
**AT BE CH CY DE DK ES FI FR GB GR IE IT LI LU
MC NL PT SE TR**
Designated Extension States:
**AL LT LV MK RO SI**

(30) Priority: **24.04.2000 JP 2000121915**

(71) Applicant: **NEC CORPORATION
Tokyo (JP)**

(72) Inventor: **Misu, Katsuya,
NEC IC Microcomputer Systems, Ltd.
Kawasaki-shi, Kanagawa (JP)**

(74) Representative: **Betten & Resch
Patentanwälte
Postfach 10 02 51
80076 München (DE)**

(54) **Segmented processing method for a transport stream for digital television and recording media for the same**

(57)     The invention provides a segmented processing method for a transport stream for digital television that allows increasing the speed of the processing in a section filter, which is filter processing for program information, that occupies 40% of the computational effort even during TS Demux processing. The invention provides a step (S 13) in which a two part search is carried out on the upper words of the comparison object data of the transport stream of a digital television, a step (S 14) in which it is determined whether or not matching data is present in the upper words, and a step (S 15) that compares the lower word of the comparison object data in the case that there is matching data present in the upper words.

## Fig. 1

```
                    START

        INITIALIZE COMPARISON OBJECT DATA    — S11

          INITIALIZE TWO PART SEARCH         — S12

                                              S13
      TWO PART SEARCH OF UPPER WORD
         OF COMPARISON OBJECT DATA

                                      S14
                    IS
               MATCHING DATA         No
                PRESENT?

                   Yes              S15

            COMPARE LOWER WORDS

                    END
```

EP 1 150 496 A2

**Description**

BACKGROUND OF THE INVENTION

Field of the Invention

The present invention relates to a segmented processing method for a transport stream (hereinafter, denoted TS Demux) for a digital television and recording media for the same, and in particular to a segmented processing method for a transport stream of a digital television that enables high speed processing in a section filter, which carries out filter processing of television program information, that occupies 40% of the computational effort even in the TS Demux processing for a digital television.

Description of the Related Art

The conventional section filter in TS Demux for a digital television will be explained referring to the figures.

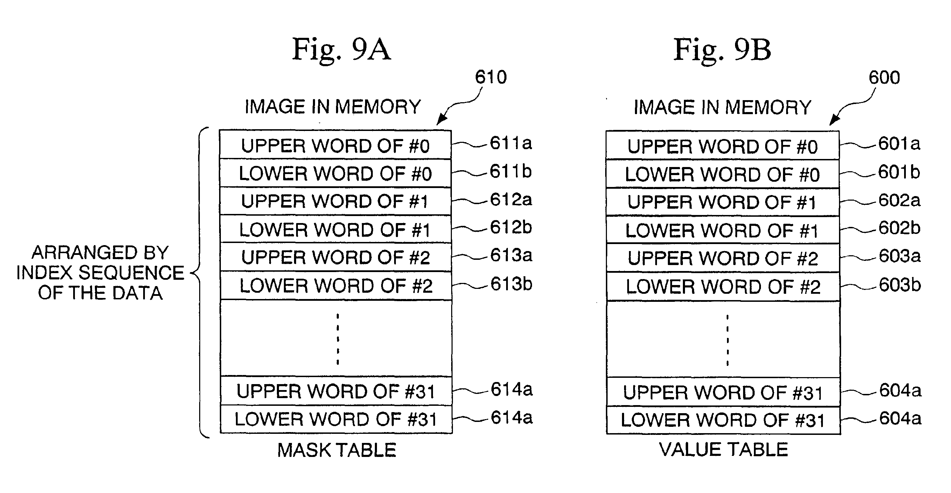

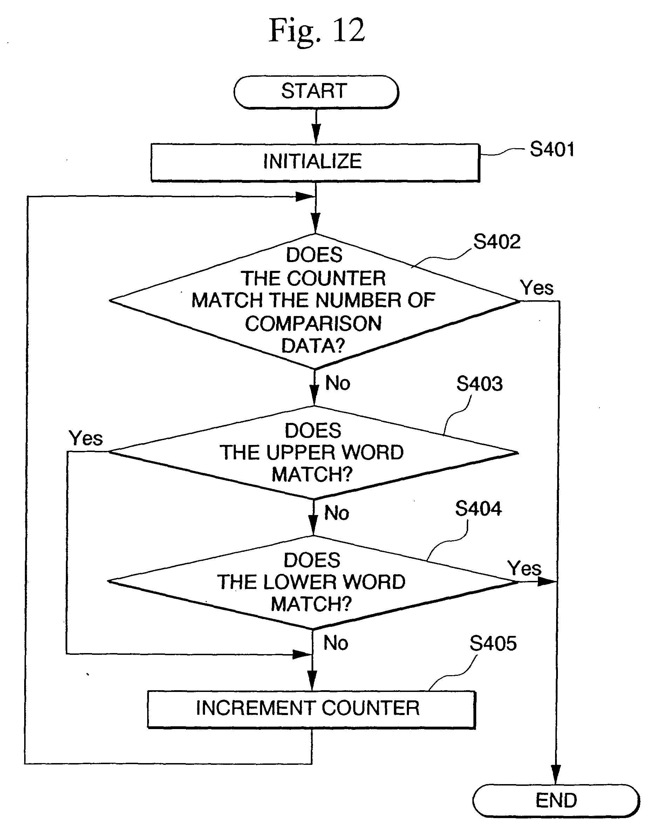

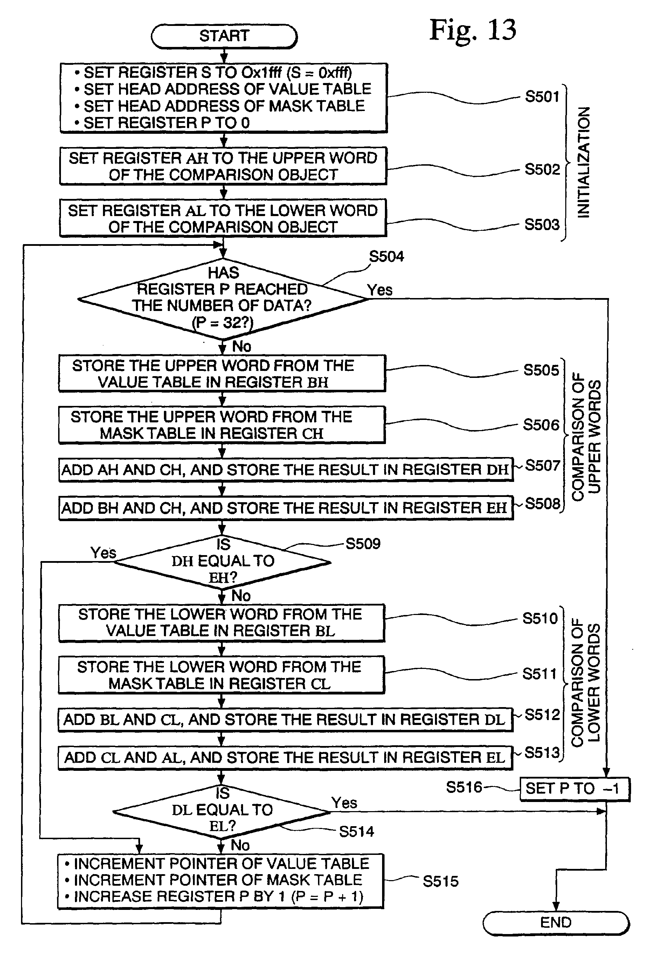

Fig. 12 and Fig. 13 show the processing flow of the conventional section filter, and Fig. 9A and 9B show the structures of a comparison data table for making comparisons in a section filter and a mask data table for masking bits that are not part of the object comparison bits in the comparison data during the comparison.

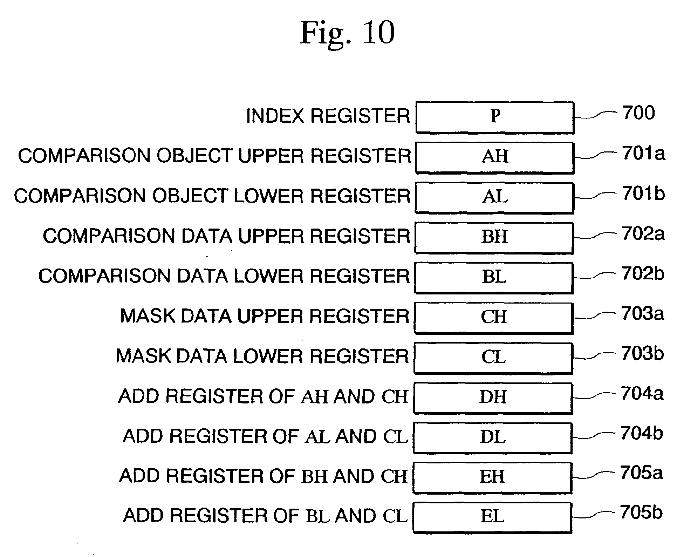

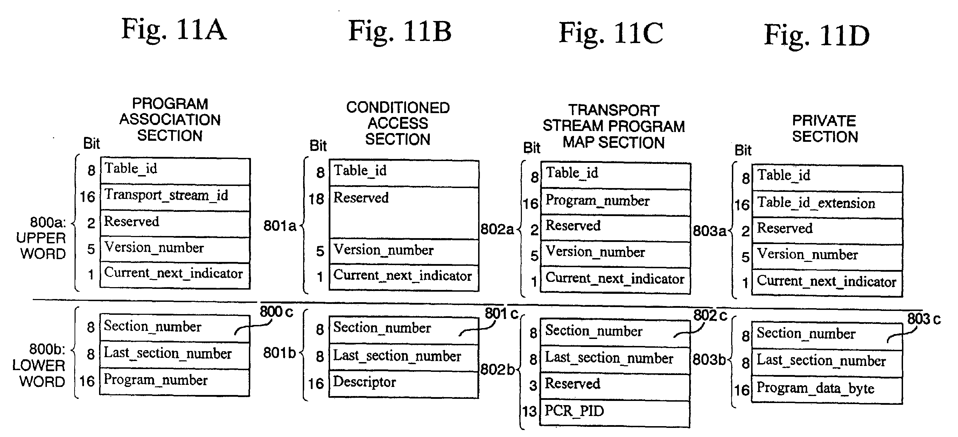

In addition, Fig. 10 shows the register structure used in conventional processing, and Figs. 11A, 11B, 11C, and 11D show the structure of the section data that becomes the object of the filter processing.

Next, each table and register will be explained in detail.

The comparison data table (600) for making comparisons in the section filter of Fig. 9B forms one unit of comparison data with two 64 bit words: an upper 1 word having 32 bits (601a) and a lower 1 word having 32 bits (601b). Next, the upper word (601a) of the first comparison data and the following lower word (601b) serve as the head, followed by the second comparison data (602a, 602b) and the third comparison data (603a, 603b), and continuing until the last $n^{th}$ comparison data (604a, 604b).

Moreover, the reason that the word unit is separated into upper and lower words is that the register width of a program device that carries out the section filter processing is assumed to be one word.

The mask data filter (610) of Fig. 9A has a structure completely identical to that of the comparison data table (600), and units of data correspond one-to-one to the comparison data. The first comparison data (601a, 601b) correspond to the mask data (611a, 611b).

Subsequently, this is identical from the second and third mask data (612a, 612b, 613a, 613b) to the last mask data (614a, 614b), and the table sizes as a whole are identical.

Fig. 10 shows the register structure used in convention section filter processing, and comprises a total of 11 registers: an index register P (700) shared by the comparison data table (600) and the mask data table (610), a register AH (701a) that stores the upper 1 word that is the comparison object, a register AL (701b) that stores the lower 1 word, a register BH (702a) that stores the upper 1 word of the comparison data, a register BL (702b) that stores the lower 1 word, a register CH (703a) that stores the upper 1 word of the mask data, a register CL (703b) that stores the lower 1 word, a register DH (704a) that stores the upper 1 word that is the result of ADDing the comparison object data and the mask data, a register DL (704b) that stores the lower 1 word, a register EH (705a) that stores the upper 1 word that is the result of ADDing the comparison data and the mask data, and a register EL (705b) that stores the lower 1 word.

Figs. 11A, 11B, 11C, and 11D show the structure of the four types of section data that are the comparison object.

The four types of section data are the upper 1 word (800a) and lower 1 word (800b) of the program association section of Fig. 11A, the upper 1 word (801a) and the lower 1 word (801b) of the conditional access section of Fig. 11B, the upper 1 word (802a) and the lower 1 word (802b) of the transport stream program map section of Fig. 11C, and the upper 1 word (803a) and the lower 1 word (803b) of the private section of Fig. 11D.

The timing at which the upper 1 word of each section is overwritten is about the same as the time interval as the interval that the end user of the digital television changes channels, and does not change frequently.

In contrast, for the lower word, the Section_numbers (800c, 801c, 802c, 803c) included therein require a mechanism in which the comparison data can easily be changed because the sections must be changed as they are received one by one.

The operation of the conventional section filter having the structure described above will be explained referring to Fig. 12 and Fig. 13.

First, an outline of the conventional section filter processing in the TS Demux of a digital television will be explained referring to Fig. 12. The conventional section filter processing initializes the register types (step S 401), determines whether or not the counter and the number of comparison data match (step S 402), determines whether or not the upper words match, and determines whether or not the lower words match (step S 404).

Next, referring to Fig. 13, the operation of a conventional section filter will be explained in detail.

First, in the conventional section filter processing, an index shared by the comparative data table (600) and the mask data table (601) is set to the register P (700) so as to designate the first data (step S 501).

Subsequently, the register P (700) is used in the comparisons process as the index for reading the comparison data and the mask data.

Next, register AH (701a) is set to upper 1 word of the comparison object (step S 502), and register AL (701b) is set to the lower 1 word that is the object of comparison (step S 503).

Next, it is determined whetheror not the register P (700) that stores the index shared by the comparison data table (600) and the mask data table (610) designates the two last upper and lower words of the comparison data table (600) and the mask data table (610) (step S 504), and if the last two upper and lower words are designated, register P (700) is set to minus 1 as a result of there being no comparison data that matches the register P (700) (step S 516).

In step S 504, in the case that the index designated by the register P (700) has not yet arrived at the last upper and lower two words, the upper 1 word of comparison data from the comparison data table (600) is read and stored in register BH (702a) according to the index indicated by register P (700) (step S 505), and similarly the upper 1 one word of the mask data is read from the mask data table (610) and stored in register CH (703a) according to the index that indicated by register P (700) (step S 506).

Next, the result of ADDing the register AH (701a) that stores the upper 1 word of the comparison object data and the register CH (703a) that stores the upper 1 word of the mask data is stored in register DH (704a) (step S 507), and similarly the result of ADDing the register BH (702a) that stores the upper 1 word of the comparison data and the register CH (703a) that stores the upper 1 word of the mask data is stored in the register EH (705a) (step S 508).

Subsequently, the result of these two ADD operations (DH, EH) which can be done by a logical AND operation are compared (step S 509), and in the case that they do not match, the value of the index stored in the register P (700) is incremented (step S 515), and the control returns to the step S 504.

In step S 509, in the case that the result of the ADD operation does match, similarly, the respective lower 1 words of the comparison object data and the comparison data are read, these are ADDed with the lower 1 word of the mask data (steps S 5 10, S 511, S 512, and S 513), DL (704b) and EL (705b), which are the result of the ADD operations, are compared (step S 514), and in the case that they match, this is treated as a match with the comparison data indicated by the index stored in register P (700), and the section filter processing terminates.

In step S 514, if there is no match, the index stored in register P (700) is incremented (step S 515), and the control returns to step S 504.

In addition, the TS Demux of the conventional digital television described above is realized by hardware, and the chip size is about 10.5 square millimeters.

However, the conventional technology has the following problems.

Specifically, because the maximum transmission rate of the broadcast station is 160 Mpbs, and each of the TS packets is 188 bytes, the data is substantially sent during a 9.4 μsec interval.

Furthermore, this type of section filter occupies 40% of the computational effort of the TS Demux, and thus in the worst case must be carried out at 9.4 μsec x 0.4 = 3.76 μsec.

However, in the case of realizing the conventional technology as it is on a 32 bit general purpose personal computer operating at 100 MHz and on hardware, real time processing by software is impossible when the 60% of the processing of the remainder, exclusive of the section processing, is included because 7.31 μsec is taken for just the section filter processing.

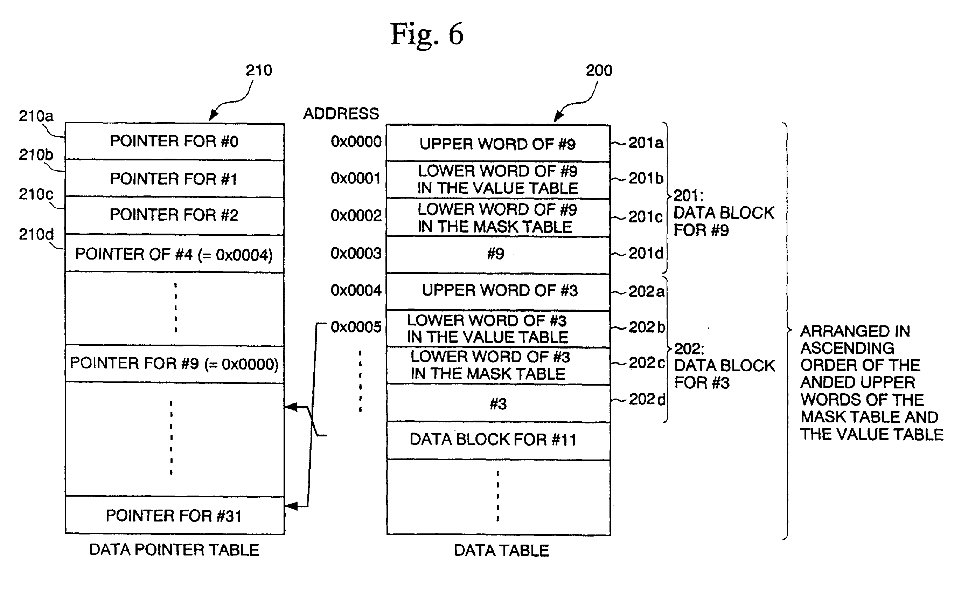

In the case that section filter processing is carried out on a 32 bit general use personal computer, since the section data length is 64 bits, two times that of the general use personal computer, as shown in Fig. 6, the comparison data and the mask data are arranged by being divided into two parts: the upper 1 word (bit 63 to bit 32) and the lower 1 word (bit 31 to bit 0). The comparison method compares the upper word of the comparison object data, and in the case there is a match, compares the lower word. When the number of data of the table is 32 bits, if none of the data match, the minimum processing time is 32 each times for upper and lower words, and the comparison must be carried out a total of 64 times. Thus, when the worst case is calculated, the result is the above-described 7.31 μsec.

Furthermore, the conventional TS Demux for a digital television is realized with dedicated hardware, so the reduction of chip size is always a problem, and software implementation becomes more pressing.

Therefore, it is an object of the present invention to present a segmented processing method for a transport stream of a digital television that can be carried out at high speed.

Specifically by carrying out TS Demux using a general purpose personal computer, the core size of the chip of the general purpose personal computer is 5.8 square millimeters, and thus a large cost reduction can be achieved. The present invention can achieve increased speed for the section filter, for which the computational effort is large, even during TS Demux.

SUMMARY OF THE INVENTION

The segmented processing method of the transport stream for digital television according to the present invention comprises a first step that initializes the comparison object data of the transport stream of a digital television, a second step that, in order to carry out a two part search of the comparison object data of the transport stream of a digital television, initializes the two part search, a third step that carries out a two part search of the upper word of the comparison object data of the transport stream of a digital television, a fourth step that identifies whether or not data that matches the upper word is present, a fifth step that, in the case that data that matches the upper word present, compares the lower word of the comparison object data of the transport stream of a digital television, and a sixth step that, in the case that no data that matches the upper word is present, returns to the third step.

In addition, the comparison object data of the transport stream of a digital television using the segmented processing method of the transport stream of a digital television of the present invention has the format of the section data.

Furthermore, in the segmented processing method of the transport stream of a digital television of the present invention, the data that is compared by the section filter serves becomes a data table that is segmented into blocks by each index, and the upper 1 word has four elements: the AND of the comparison data and the mask data having a shared index, the lower 1 word of the comparison data, the lower 1 word of the mask data, and the index value.

In addition, the two part search of the segmented processing method of the transport stream of a digital television of the present invention also takes a form in which the number of data that are the object of the search is $2^{N-1}$. Additionally, the two part search of the segmented processing method of the transport stream of a digital television of the present invention finds the next search position by dividing the search range and the offset from the current search position into two equal parts, and adding or subtracting this to or from the search position.

In addition, the lower word of the segmented processing method of the transport stream of a digital television of the present invention prepares overwriting of comparison data that changes every tens of milliseconds, and can be formed so that a pointer to a data table sorted by the index sequence is stored.

In addition, the segmented processing method of transport stream of a digital television of the present invention can be recorded on recording media.

Specifically, the section filter of the segmented processing method of the transport stream of a digital television of the present invention finds the data that matches the information for two words from among a plurality of prepared comparison data.

Moreover, mask data is also prepared that corresponds 1 to 1 to the comparison data, and the bits that become 0 when ADDed to the mask data are excluded from the object of the search.

In addition, in the section data, in contrast to the upper 1 word that only changes according to the rate that the end user of the digital television changes the channels, the lower 1 word changes in units of tens of milliseconds while section data is being delivered. In the present invention, these characteristics of the section data are used, and a two-step comparison is carried out.

BRIEF DESCRIPTION OF THE DRAWINGS

Fig. 1 is a flowchart for the segmented processing method of the transport stream of a digital television according to the first embodiment of the present invention.

Fig. 2 is another flowchart for the segmented processing method of the transport stream of a digital television according to the first embodiment of the present invention.

Fig. 3 is yet another flowchart of the segmented processing method of a transport stream of a digital television according to the first embodiment of the present invention.

Fig. 4 is a different flowchart of the segmented processing method of the transport stream of a digital television according to the first embodiment of the present invention.

Fig. 5 is a different flowchart of the segmented processing method of the transport stream of a digital television according to the first embodiment of the present invention.

Fig. 6 is a structure diagram of the tables used in the segmented processing method of the transport stream of a digital television according to the first embodiment of the present invention.

Fig. 7 is a structure diagram of the registers the segmented processing method of the transport stream of a digital television according to the first embodiment of the present invention.

Fig. 8 is a flowchart of the two search method.

Figs. 9A and 9B are structure diagrams of the tables used in a conventional segmented processing method of the transport stream of a digital television.

Fig. 10 is a structure diagram of the registers used in a conventional segmented processing method of the transport stream of a digital television.

Figs. 11A to 11C are structure diagrams of the section data used in a conventional segmented processing method of the transport stream of a digital television.

Fig 12 is a flowchart of the tables used in a conventional segmented processing method of the transport stream of a digital television.

Fig. 13 shows the detailed flow of a conventional segmented processing method of the transport stream of a digital television.

DETAILED DESCRIPTION OF THE INVENTION

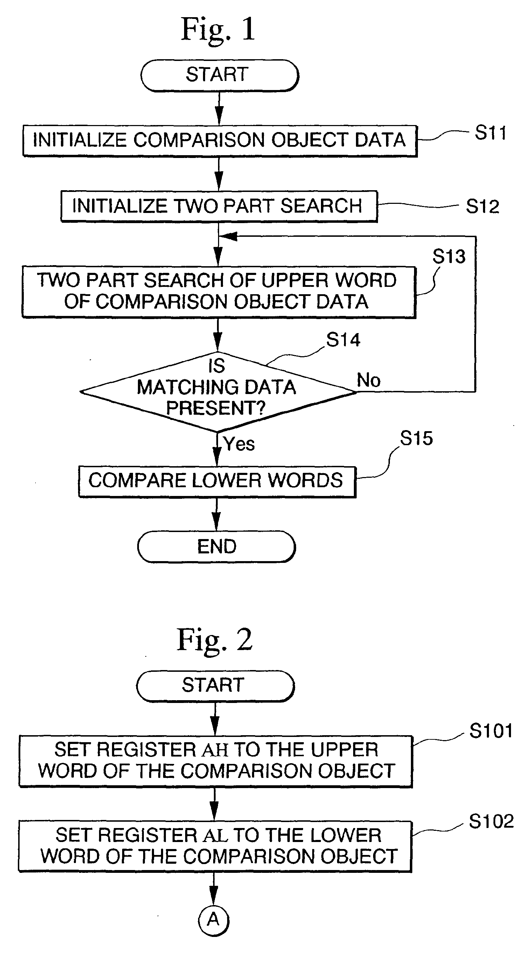

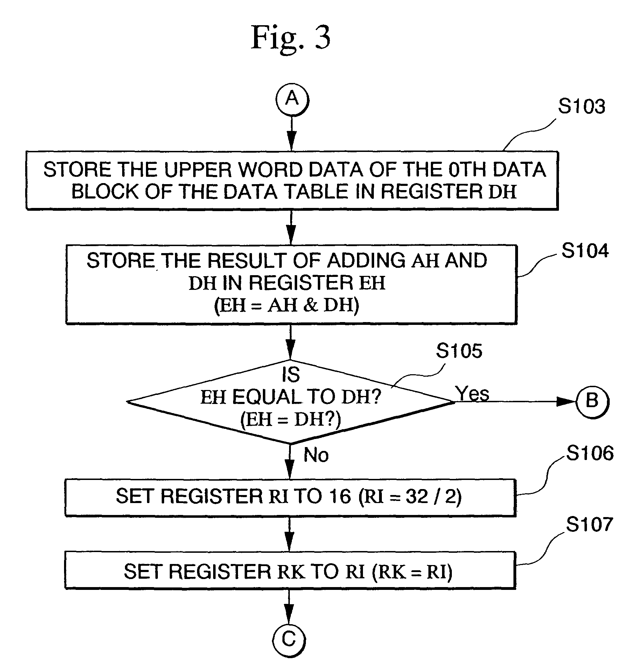

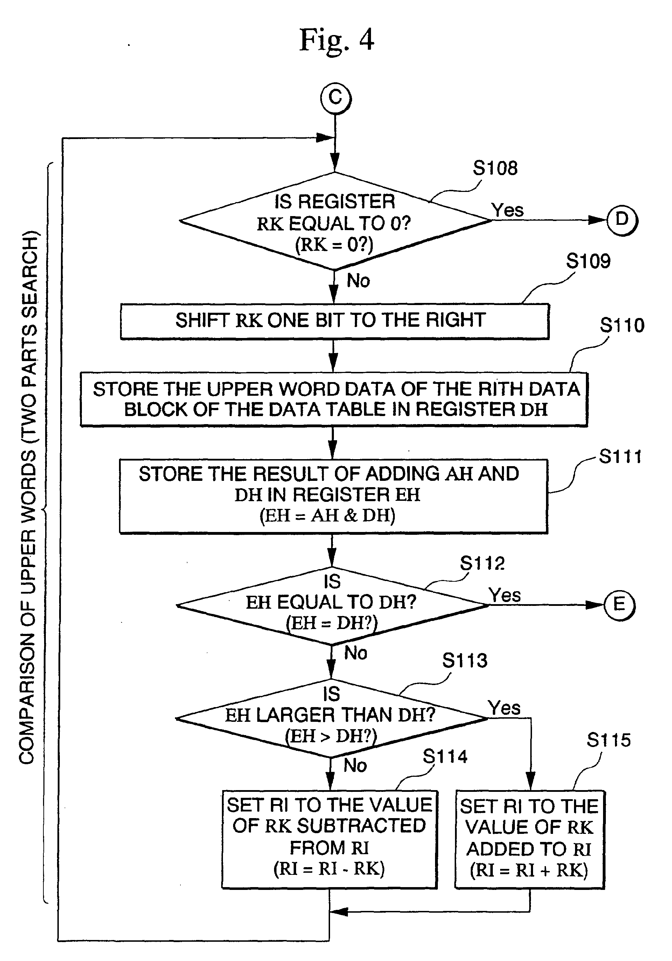

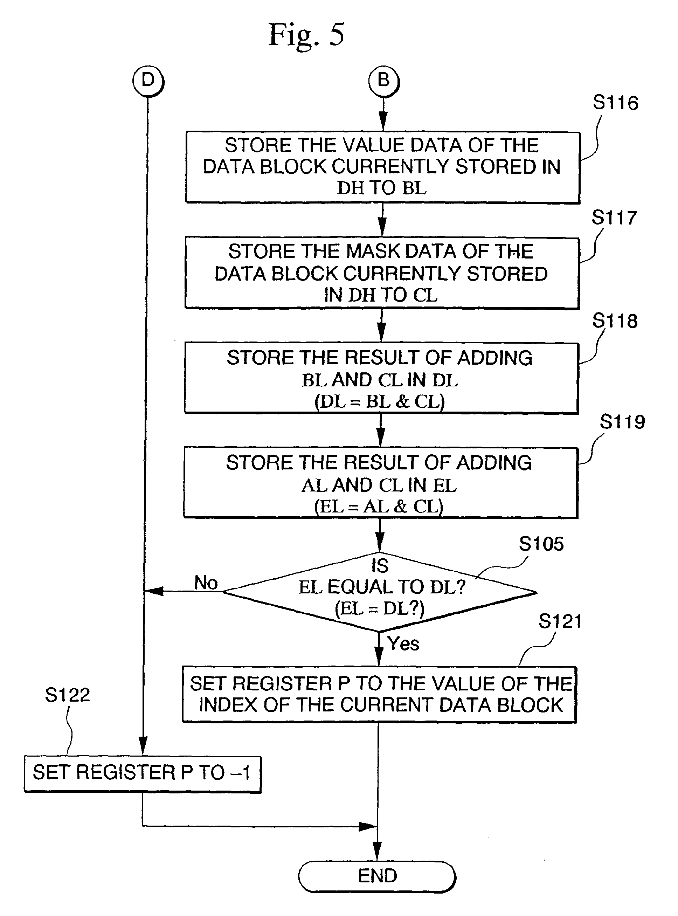

Next, the first embodiment of the present invention will be explained referring to the figures. The segmented processing method of the transport stream of a digital television according to the first embodiment of the present invention is shown in Fig. 1 through Fig. 8.

Fig. 1 through Fig. 5 show the processing flow of the section filter of the embodiment of the present invention, and Fig. 6 shows the data table and data pointer table that have unified the comparison data table and the mask data table of the conventional section filter in order to attain the high speed processing of by the present invention.

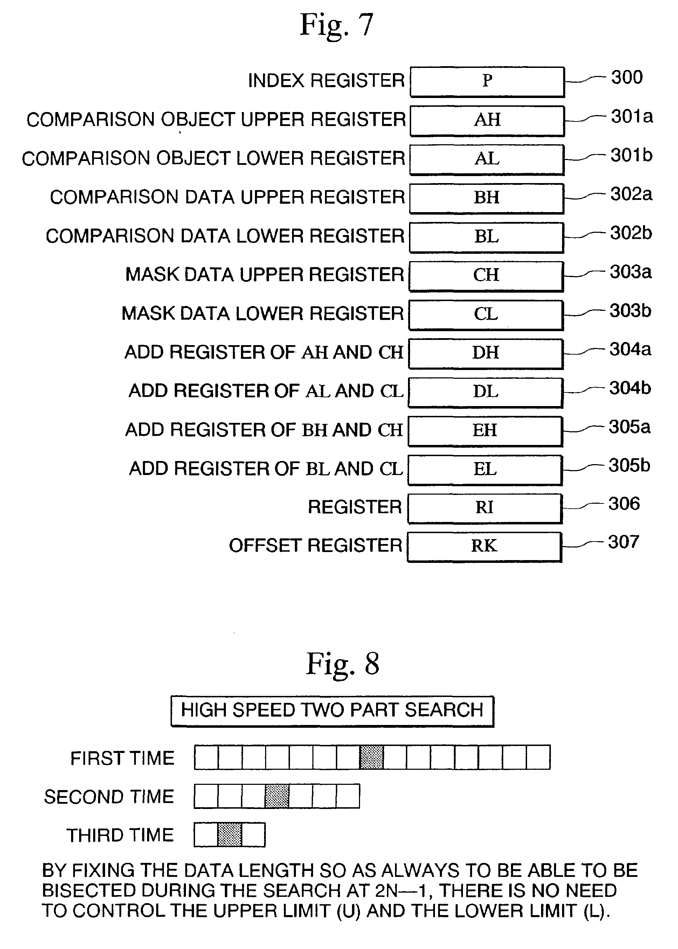

Fig. 7 shows the register structure used in the present invention. Fig. 8 shows an improved flow of the two part search method used in the present invention.

First, an outline of the segmented processing method of the transport stream of a digital television according to the first embodiment of the present invention will be explained referring to Fig. 1.

In the segmented processing method of the transport stream of a digital television according to the first embodiment of the present invention, the comparison object data of the transport stream of a digital television is initialized (step S 11) and in order to carry out a two part search of the comparison object data of the transport stream for a digital television, the two part search is initialized (step S 12).

Next, a two part search is carried out on the upper word of the comparison object data of the transport stream of a digital television (step S 13), it is determined whether or not data that matches the upper word is present (step S 14), and in the case that data that matches the upper word is present, it is compared to the lower word of the comparison object data of the transport stream of a digital television (step S 15) and the processing terminates.

In the case that data matching the upper word is not present, the flow returns to step S 13.

Next, the separate structural elements will be explained.

The data table (200) in Fig. 6 has four elements that serve as one block (201, 202): the result of ANDing the respective upper 1 words of the comparison data and the mask data (201a, 202a) having the same index, the lower 1 word of the comparison data having the same index (201b, 202b), the lower 1 word of the mask data having the same index (201c, 202c), and the index (201d, 202d). In the data table (200) itself, the result of ANDing the upper 1 word of each of the comparison data and the mask data (201a, 202a) serves as a key having the same index, and are sorted advance by blocks.

The data pointer table (210) stores the header addresses (210a, 210b, 210c, 210d, and 210e) of the blocks (210, 202) of the data table (200) by the index sequence.

Fig. 7 shows the register structure used by the section filter processing of the embodiment of the present invention, and is formed by a total of 13 registers: a register P (300) that stores the index to the data table (200), a register AH (301a) that stores the upper 1 word of the comparison object data, a register AL (301b) that stores the lower 1 word, a register BL (302b) that stores the lower 1 word of the comparison data, a register CL (303b) that stores the lower 1 word of the mask data, a register DH (304a) that stores the result of ADDing the upper 1 word of the comparison object data and the upper 1 word of the mask data having the same index, a register DL (304b) that stores the result of ADDing the lower 1 words together, a register EH (305a) that stores the upper 1 word that is the result of ADDing the comparison data, the mask data, and the comparison object data, a register EL (305b) that stores the lower 1 word, a register RI (306) that stores the index used in the two part search, and a register RK (307) that stores the offset from the index to the next search position.

Next, the entire operation of the embodiment of the present invention will be explained in detail referring to the flow of Fig. 1 through Fig. 5, Fig. 6, and Fig. 7.

First, the upper 1 word of the comparison object data is stored in register AL (301a) (step S 101), and the lower 1 word is stored in the register AL (301b) (step S 102).

Next, the result (201a) of ADDing the respective upper 1 words of the comparison data and mask data having the same index of the first block (201) of the data table (200) is stored in register DH (304a) (step S 103), and the result of ADDing the register AH (301a) and register DH (304a) is stored in the register EH (305a) (step S 104).

Next, register DH (303a) and register EH (305a) are compared (step S 105), and if they are not equal, the index used in the two part search in register RI (306) is set at the half of the value of the two part search object data number ($2^{N-1}$) serves as the first index (step S 106), and the register RK (307) is set to the same value, which is the offset to the next search position from the index (step S 107).

Here, the reason for setting the number of two part search object data to $2^{N-1}$ will be explained referring to Fig. 8.

In the two part search, a new index that is found when the search range is divided into two equal parts will always be at the exact center of the new search range, and thus there is no need to control the upper or lower limits of the search range, and while continuously dividing the offset value from the index into two equal parts, the next search position can be found by using only addition and subtraction.

Next, after step S 107, the offset to the next search position from the index is found by determining whether or not the register RK (307) is 0 (step S 108), and if it is not 0, the content of the register RK (307) is shifted one bit to the right (step S 109).

Next, the upper 1 words (201a, 202a, ...) of the result of ADDing the comparison object data of the blocks (201, 202,...) of the data table (200) shown by register RI (306) and the mask data is stored in register DH (304a) (step S 110), and the result of ADDing the register AH (301a) and the register DH (304a) is stored in register EH (305a) (step S 111).

Next, the contents of the register DH (304a) and the register EH (305a) are compared to ascertain whether or not they are identical (step S 113), and if they are not equal, it is determined whether the content of register EH (305a) is larger than the register DH (304a) (step S 112). If it is smaller, the content of the register RK (307) is subtracted from the register RI (306) (step S 114), and in step S113, if it is larger, the content of register RK (307) is added to register RI (306) (step S 115).

This is how finding the next index of the two part search is carried out. After step S 114 or step S 115, the control moves to step S 108, and it is determined whether or not the register RK (307) is 0.

Here, in the case that it is 0, it means that it is determined that there is no matching comparison object data present in the comparison of the section filter, and the index in the register P (300) is set to minus 1 (step S 122).

In addition, in step S 105 or step S 112, in the case that the upper 1 word of the comparison object data matches, register BL (304) is set to the lower 1 word (201b 202b, ...) of the comparison data in the same block as the block (201, 202,...) of the data table (200) having the matching content of the register DH (304a) (step S 116), and the register CL is set to the lower 1 word of the same mask data (303) (step S 117).

Next, the result of ADDing the register BL (302) and the register CL (303b) is stored in register DL (304b), and the result of ANDing the register AL (301b) and the register CL (303b) is stored in register EL (305b) (step S 119).

Here, the contents of register DL (304b) and the register EL (305b) are compared (step S 120), and if they are equal, the indexes (201d, 202d, ...) of the current blocks (201, 202, ...) are made the indexes of the matching comparison data and stored in register P (300) (step S 121), and the flow terminates.

In step S 120, in the case that there is no match, this means that there is no matching comparison object data present in the comparison of the section filter, and the index in the register P (300) is set as minus 1 (step S 122), and the flow terminates.

Moreover, the segmented processing method of the transport stream of a digital television of the present invention as explained above is usually recorded on recording media.

In this manner, the first effect of the present invention is that the high speed section filter processing is enabled. The reason is that there is no needless comparison of the upper and lower words of the section data because the upper 1 word of the comparison data and the corresponding mask data are ADDed in advance since the upper 1 word does not change with respect to the lower 1 word, the result is made a key, and a two part search is carried out; the two part search itself sets the number of search items at $2^{N-1}$, and thus the search position is always found without having to manage the upper and lower limits of the search; and furthermore, the lower 1 word is compared only in the case that the upper words match.

In addition, although the lower 1 word of the comparison data changes frequently compared to the upper 1 word, a sorting operation for carrying out a two part search does not occur at each overwriting of the lower 1 word of the comparison data because the lower 1 word of the comparison data in the block of the data table (200) can be overwritten using the data pointer table (210), and therefore there is also the merit that processing does not increase when compared to the overwriting of conventional comparison data.

The substantial effect of the present invention can be represented by the following formula as a function of the time consumed in processing by the current method of realization and the method of the present invention.

The worst case of the number of clock cycles for processing before the present invention has been:

$$Tp = (N - 1) \times (2a + 12) + 6a + 19,$$

where 'N' is the number of data and 'a' is the access clock cycle of the memory.

In addition, in with the present invention, this can be represented by the following formula:

$$Tn = (a + 14) \log 2 (N-1) + 4a + 12$$

Therefore, when the data number N = 32 and a = 5 clock cycles, the total clock cycles is as follows.

Here, Tp = 731 clock cycles, and Tn = 108 clock cycles. Therefore, by the present invention, there is a reduction of 85%, since 108/731 = 15%.

In addition, the operating frequency of the general purpose personal computer that was used is 100 MHz and 1 clock cycle was 0.01 μsec, and thus by the present invention, the processing can be completed in 1.08 μsec, in contrast to the 7.31 μsecs of the conventional technology.

Because of this, the processing of the TS packets can be easily carried out within each 9.4 μsec interval without loss of data, and thereby TS Demux processing using software becomes possible. Therefore, hardware can be reduced, which is related to reduction in chip size, and large-scale cost reductions can be implemented.

**Claims**

1. A segmented processing method for a transport stream for digital television comprising:

   a first step that initializes the comparison object data of said transport stream of digital television;

a second step that, in order to carry out a two part search of said comparison object data of the transport stream for digital television, initializes said two part search;

a third step that carries out said two part search on the upper word of said comparison object data of the transport stream for digital television;

a fourth step that identifies whether or not data that matches said upper word is present;

a fifth step that, in the case that data that matches said upper word is present, compares the lower word of said comparison object data of the transport stream for digital television; and

a sixth step that, in the case that no data that matches said upper word is present, returns to said third step.

2. The segmented processing method for a transport stream for digital television according to claim 1, wherein the method comprises a section filter that filters the program information that is included in said transport stream processing for digital television.

3. The segmented processing method for a transport stream for digital television according to claim 1 or 2, wherein said comparison object data of said transport stream for digital television has the format of section data.

4. The segmented processing method for a transport stream for digital television according to claim 2 or 3, wherein the data that is compared by said section filter form a data table that is segmented into blocks by each index, and said upper 1 word has four elements: the ANDed comparison data and the mask data having a same index, the lower 1 word of said comparison data, the lower 1 word of mask data, and an index value.

5. The segmented processing method for a transport stream for digital television according to one of the preceding claims, wherein, in said two part search, the number of data that are the object of the search is $2^{N-1}$ (where N is a positive integer).

6. The segmented processing method for a transport stream for digital television according to one of the preceding claims, wherein said two part search finds the next search position by dividing the search range and the offset from the current search position into two equal parts, and adding or subtracting this to or from the search position.

7. The segmented processing method for a transport stream for digital television according to one of the preceding claims, wherein said lower word prepares the overwriting of comparison data that changes every tens of milliseconds, and stores a pointer to a data table sorted by the index sequence.

8. A recording medium that records the segmented processing method for a transport stream for digital television according to one of claims 1 to 7.

9. A computer program product comprising a computer-usable medium having computer-readable program code means embodied therein for causing a computer to carry out the segmented processing method for a transport stream for digital television according to one of claims 1 to 7.

# Fig. 1

```
           ┌──────────────┐
           │    START     │
           └──────┬───────┘
                  ▼
  ┌─────────────────────────────────────┐      S11
  │ INITIALIZE COMPARISON OBJECT DATA    │
  └──────────────┬──────────────────────┘
                 ▼
     ┌──────────────────────────────┐          S12
     │   INITIALIZE TWO PART SEARCH  │
     └──────────────┬───────────────┘
                    ▼
  ┌─────────────────────────────────────┐      S13
  │  TWO PART SEARCH OF UPPER WORD       │
  │   OF COMPARISON OBJECT DATA          │
  └──────────────┬──────────────────────┘
                 ▼                 S14
            ╱──────────╲
           ╱     IS     ╲      No
          ╱ MATCHING DATA ╲──────────┐
          ╲   PRESENT?   ╱           │
           ╲──────┬─────╱            │
                  │ Yes              │
                  ▼                  │
     ┌──────────────────────┐   S15  │
     │ COMPARE LOWER WORDS   │        │
     └──────────┬───────────┘        │
                ▼                    │
           ┌──────────┐              │
           │   END    │              │
           └──────────┘              │
```

# Fig. 2

```
           ┌──────────────┐
           │    START     │
           └──────┬───────┘
                  ▼
  ┌─────────────────────────────────────┐      S101
  │ SET REGISTER AH TO THE UPPER         │
  │  WORD OF THE COMPARISON OBJECT       │
  └──────────────┬──────────────────────┘
                 ▼
  ┌─────────────────────────────────────┐      S102
  │ SET REGISTER AL TO THE LOWER         │
  │  WORD OF THE COMPARISON OBJECT       │
  └──────────────┬──────────────────────┘
                 ▼
               ( A )
```

# Fig. 3

(A)

S103

STORE THE UPPER WORD DATA OF THE 0TH DATA
BLOCK OF THE DATA TABLE IN REGISTER DH

S104

STORE THE RESULT OF ADDING AH AND
DH IN REGISTER EH
(EH = AH & DH)

S105

IS
EH EQUAL TO DH?
(EH = DH?)

Yes → (B)

No

S106

SET REGISTER RI TO 16 (RI = 32 / 2)

S107

SET REGISTER RK TO RI (RK = RI)

(C)

# Fig. 4

(C)

**COMPARISON OF UPPER WORDS (TWO PARTS SEARCH)**

**S108**

IS REGISTER RK EQUAL TO 0? (RK = 0?)  — Yes → (D)

No

**S109**

SHIFT RK ONE BIT TO THE RIGHT

**S110**

STORE THE UPPER WORD DATA OF THE RITH DATA BLOCK OF THE DATA TABLE IN REGISTER DH

**S111**

STORE THE RESULT OF ADDING AH AND DH IN REGISTER EH (EH = AH & DH)

**S112**

IS EH EQUAL TO DH? (EH = DH?)  — Yes → (E)

No

**S113**

IS EH LARGER THAN DH? (EH > DH?)  — Yes

No

**S114**

SET RI TO THE VALUE OF RK SUBTRACTED FROM RI (RI = RI - RK)

**S115**

SET RI TO THE VALUE OF RK ADDED TO RI (RI = RI + RK)

10

# Fig. 5

Ⓓ        Ⓑ

STORE THE VALUE DATA OF THE
DATA BLOCK CURRENTLY STORED IN
DH TO BL — S116

STORE THE MASK DATA OF THE
DATA BLOCK CURRENTLY STORED
IN DH TO CL — S117

STORE THE RESULT OF ADDING
BL AND CL IN DL
(DL = BL & CL) — S118

STORE THE RESULT OF ADDING
AL AND CL IN EL
(EL = AL & CL) — S119

S105

IS
EL EQUAL TO DL?
(EL = DL?)

No

Yes

SET REGISTER P TO THE VALUE OF THE
INDEX OF THE CURRENT DATA BLOCK — S121

S122

SET REGISTER P TO –1

END

# Fig. 6

| DATA POINTER TABLE (210) | | ADDRESS | DATA TABLE (200) | |
|---|---|---|---|---|
| 210a | POINTER FOR #0 | 0x0000 | UPPER WORD OF #9 | 201a |
| 210b | POINTER FOR #1 | 0x0001 | LOWER WORD OF #9 IN THE VALUE TABLE | 201b |
| 210c | POINTER FOR #2 | 0x0002 | LOWER WORD OF #9 IN THE MASK TABLE | 201c |
| 210d | POINTER OF #4 (= 0x0004) | 0x0003 | #9 | 201d |
| | ⋮ | 0x0004 | UPPER WORD OF #3 | 202a |
| | POINTER FOR #9 (= 0x0000) | 0x0005 | LOWER WORD OF #3 IN THE VALUE TABLE | 202b |
| | | | LOWER WORD OF #3 IN THE MASK TABLE | 202c |
| | ⋮ | | #3 | 202d |
| | | | DATA BLOCK FOR #11 | |
| | POINTER FOR #31 | | ⋮ | |

201: DATA BLOCK FOR #9

202: DATA BLOCK FOR #3

ARRANGED IN ASCENDING ORDER OF THE ANDED UPPER WORDS OF THE MASK TABLE AND THE VALUE TABLE

EP 1 150 496 A2

# Fig. 7

| | | |
|---|---|---|
| INDEX REGISTER | P | — 300 |
| COMPARISON OBJECT UPPER REGISTER | AH | — 301a |
| COMPARISON OBJECT LOWER REGISTER | AL | — 301b |
| COMPARISON DATA UPPER REGISTER | BH | — 302a |
| COMPARISON DATA LOWER REGISTER | BL | — 302b |
| MASK DATA UPPER REGISTER | CH | — 303a |
| MASK DATA LOWER REGISTER | CL | — 303b |
| ADD REGISTER OF AH AND CH | DH | — 304a |
| ADD REGISTER OF AL AND CL | DL | — 304b |
| ADD REGISTER OF BH AND CH | EH | — 305a |
| ADD REGISTER OF BL AND CL | EL | — 305b |
| REGISTER | RI | — 306 |
| OFFSET REGISTER | RK | — 307 |

# Fig. 8

HIGH SPEED TWO PART SEARCH

FIRST TIME

SECOND TIME

THIRD TIME

BY FIXING THE DATA LENGTH SO AS ALWAYS TO BE ABLE TO BE BISECTED DURING THE SEARCH AT 2N—1, THERE IS NO NEED TO CONTROL THE UPPER LIMIT (U) AND THE LOWER LIMIT (L).

Fig. 9B

600

IMAGE IN MEMORY

| | |
|---|---|
| UPPER WORD OF #0 | 601a |
| LOWER WORD OF #0 | 601b |
| UPPER WORD OF #1 | 602a |
| LOWER WORD OF #1 | 602b |
| UPPER WORD OF #2 | 603a |
| LOWER WORD OF #2 | 603b |
| - - - - - | |
| UPPER WORD OF #31 | 604a |
| LOWER WORD OF #31 | 604a |

VALUE TABLE

Fig. 9A

610

IMAGE IN MEMORY

| | |
|---|---|
| UPPER WORD OF #0 | 611a |
| LOWER WORD OF #0 | 611b |
| UPPER WORD OF #1 | 612a |
| LOWER WORD OF #1 | 612b |
| UPPER WORD OF #2 | 613a |
| LOWER WORD OF #2 | 613b |
| - - - - - | |
| UPPER WORD OF #31 | 614a |
| LOWER WORD OF #31 | 614a |

MASK TABLE

ARRANGED BY INDEX SEQUENCE OF THE DATA

14

# Fig. 10

| | | |
|---|---|---|
| INDEX REGISTER | P | 700 |
| COMPARISON OBJECT UPPER REGISTER | AH | 701a |
| COMPARISON OBJECT LOWER REGISTER | AL | 701b |
| COMPARISON DATA UPPER REGISTER | BH | 702a |
| COMPARISON DATA LOWER REGISTER | BL | 702b |
| MASK DATA UPPER REGISTER | CH | 703a |
| MASK DATA LOWER REGISTER | CL | 703b |
| ADD REGISTER OF AH AND CH | DH | 704a |
| ADD REGISTER OF AL AND CL | DL | 704b |
| ADD REGISTER OF BH AND CH | EH | 705a |
| ADD REGISTER OF BL AND CL | EL | 705b |

## Fig. 11A    Fig. 11B    Fig. 11C    Fig. 11D

**PROGRAM ASSOCIATION SECTION**

| Bit | |
|---|---|
| 8 | Table_id |
| 16 | Transport_stream_id |
| 2 | Reserved |
| 5 | Version_number |
| 1 | Current_next_indicator |

800a: UPPER WORD

| Bit | |
|---|---|
| 8 | Section_number |
| 8 | Last_section_number |
| 16 | Program_number |

800b: LOWER WORD

800c / 801b

**CONDITIONED ACCESS SECTION**

| Bit | |
|---|---|
| 8 | Table_id |
| 18 | Reserved |
| 5 | Version_number |
| 1 | Current_next_indicator |

801a

| Bit | |
|---|---|
| 8 | Section_number |
| 8 | Last_section_number |
| 16 | Descriptor |

801c / 802b

**TRANSPORT STREAM PROGRAM MAP SECTION**

| Bit | |
|---|---|
| 8 | Table_id |
| 16 | Program_number |
| 2 | Reserved |
| 5 | Version_number |
| 1 | Current_next_indicator |

802a

| Bit | |
|---|---|
| 8 | Section_number |
| 8 | Last_section_number |
| 3 | Reserved |
| 13 | PCR_PID |

802c / 803b

**PRIVATE SECTION**

| Bit | |
|---|---|
| 8 | Table_id |
| 16 | Table_id_extension |
| 2 | Reserved |
| 5 | Version_number |
| 1 | Current_next_indicator |

803a

| Bit | |
|---|---|
| 8 | Section_number |
| 8 | Last_section_number |
| 16 | Program_data_byte |

803c

EP 1 150 496 A2

## Fig. 12

START

INITIALIZE — S401

S402
DOES THE COUNTER MATCH THE NUMBER OF COMPARISON DATA? — Yes

No

S403
DOES THE UPPER WORD MATCH? — Yes

No

S404
DOES THE LOWER WORD MATCH? — Yes

No

INCREMENT COUNTER — S405

END

Fig. 13

```
                    ┌─────────────┐
                    │    START    │
                    └──────┬──────┘
```

| | |
|---|---|
| • SET REGISTER S TO 0x1fff (S = 0xfff)<br>• SET HEAD ADDRESS OF VALUE TABLE<br>• SET HEAD ADDRESS OF MASK TABLE<br>• SET REGISTER P TO 0 | S501 |
| SET REGISTER AH TO THE UPPER WORD<br>OF THE COMPARISON OBJECT | S502 |
| SET REGISTER AL TO THE LOWER WORD<br>OF THE COMPARISON OBJECT | S503 |

INITIALIZATION

HAS REGISTER P REACHED THE NUMBER OF DATA? (P = 32?) — S504 — Yes

No

| | |
|---|---|
| STORE THE UPPER WORD FROM THE<br>VALUE TABLE IN REGISTER BH | S505 |
| STORE THE UPPER WORD FROM THE<br>MASK TABLE IN REGISTER CH | S506 |
| ADD AH AND CH, AND STORE THE RESULT IN REGISTER DH | S507 |
| ADD BH AND CH, AND STORE THE RESULT IN REGISTER EH | S508 |

COMPARISON OF UPPER WORDS

IS DH EQUAL TO EH? — S509 — Yes

No

| | |
|---|---|
| STORE THE LOWER WORD FROM THE<br>VALUE TABLE IN REGISTER BL | S510 |
| STORE THE LOWER WORD FROM THE<br>MASK TABLE IN REGISTER CL | S511 |
| ADD BL AND CL, AND STORE THE RESULT IN REGISTER DL | S512 |
| ADD CL AND AL, AND STORE THE RESULT IN REGISTER EL | S513 |

COMPARISON OF LOWER WORDS

S516 — SET P TO −1

IS DL EQUAL TO EL? — Yes — S514

No

| | |
|---|---|
| • INCREMENT POINTER OF VALUE TABLE<br>• INCREMENT POINTER OF MASK TABLE<br>• INCREASE REGISTER P BY 1 (P = P + 1) | S515 |

```
                    ┌─────────────┐
                    │     END     │
                    └─────────────┘
```